# EUROPEAN PATENT SPECIFICATION

(11) **EP 4 625 960 B1**
(45) Date of publication and mention of the grant of the patent: **19.08.2026**
(21) Application number: 24187587.1
(22) Date of filing: 10.07.2024
(51) Int. Cl.: H04N 1/387, H04N 1/00, G06F 3/12

(54) **IMAGE FORMING SYSTEM, PROGRAM, AND IMAGE FORMING METHOD FOR CORRECTING PRINTED IMAGE DEVIATION**
BILDERZEUGUNGSSYSTEM, PROGRAMM UND BILDERZEUGUNGSVERFAHREN ZUR KORREKTUR DER ABWEICHUNG DES GEDRUCKTEN BILDES
SYSTÈME DE FORMATION D'IMAGE, PROGRAMME ET PROCÉDÉ DE FORMATION D'IMAGE COMPRENANT UNE CORRECTION D'ECART D'IMPRESSION

(30) Priority: 25.03.2024 JP 2024047563
(43) Date of publication of application: 01.10.2025
(73) Proprietor: FUJIFILM Business Innovation Corp., Minato-ku Tokyo (JP)
(72) Inventor: ANDO, Yuki, Yokohama-shi, Kanagawa (JP); TATEISHI, Naohiro, Yokohama-shi, Kanagawa (JP); INOUE, Tetsuhiro, Yokohama-shi, Kanagawa (JP)
(74) Representative: Kurig, Thomas

(56) References cited:
- US-A1- 2017 034 392
- US-A1- 2018 220 038
- US-A1- 2018 278 757
- US-A1- 2020 053 228

## Description

### BACKGROUND OF THE INVENTION

### (i) Field of the Invention

The present invention relates to an image forming system, a program, and an image forming method.

### (ii) Description of Related Art

An image forming system is a system that forms an image on a paper. In the image forming system, an image forming position on the paper is changed due to various errors in paper conveyance processes, the expansion and contraction of the paper, and the like. Therefore, an image forming system including a function of correcting an image forming position while executing a print job has been proposed. More specifically, by scanning a first image formed on a first paper, which is a previous paper, and analyzing a scanned image obtained by scanning the first image, a deviation amount of the first image with respect to the first paper is obtained. A position where a second image is formed on a second paper, which is a subsequent paper, is corrected based on the deviation amount. A feedback correction based on such a scanned image is repeatedly executed.

JP2021-14061A discloses an image forming apparatus. In the image forming apparatus, a plurality of deviation amounts detected in a previous printing process (for example, a test printing process) are stored, and a position where each image is formed on each paper is corrected based on each stored deviation amount in a subsequent printing process (for example, a main printing process).

US 2017/034392 A1 discloses an image measurement sheet for measuring an image formed on a recording medium. The image measurement sheet includes a sheet having a plurality of medium scan windows used for detecting the recording medium, a plurality of image scan windows used for detecting the image formed on the recording medium, and an information scan window used for detecting imaging condition information recorded on the recording medium with the image, the plurality of medium scan windows to be corresponded to a portion of sides and a corner of the recording medium, the plurality of image scan windows to be corresponded to a portion of the image formed on the recording medium, and the information scan window to be corresponded to the imaging condition information recorded on the recording medium.

### SUMMARY OF THE INVENTION

In an image forming system including a function of correcting an image forming position based on a scanned image, the scanned image is obtained from an image on a paper after correction of the image forming position. The deviation amount obtained from the scanned image is not an original deviation amount reflecting various deviation factors but is relative information representing excess or deficiency of the applied correction amount. Therefore, in a case where a correction amount is calculated based on only the deviation amount obtained from the scanned image, a problem of not being able to correctly correct the image forming position may occur.

Since the deviation amount is relative information, a consideration is made that a current correction amount is determined based on the deviation amount and a previous correction amount. In that case, a problem may occur in that the responsiveness of a feedback correction deteriorates due to the influence of the previous correction amount.

An object of the present invention is to enable excellent correction of an image forming position in terms of accuracy or responsiveness than correction based on a relative deviation amount and a previous correction amount. Further, an object of the present invention is to enable such correction to be reliably performed. The present invention is provided by the appended claims. The following disclosure serves a better understanding of the present invention.

According to a first aspect of the present disclosure, there is provided an image forming system including: an image forming portion that forms an image on a paper; an image scanning portion that scans the image formed on the paper; and a processor that controls the image forming portion based on a scanned image obtained through scanning of the image scanning portion, in which the processor is configured to: specify, based on a first scanned image that is corresponding to a first image formed on a first paper by the image forming portion and that is obtained through scanning of the image scanning portion, a first deviation amount representing a magnitude of a deviation of the first image with respect to the first paper; specify a first correction amount for deviation correction applied when the first image is formed, based on first management information included in the first scanned image; calculate a second correction amount based on the first deviation amount and the first correction amount; embed second management information representing the second correction amount in a second image; and correct a position where the second image is formed on a second paper, according to the second correction amount.

According a second aspect of the present disclosure, in the image forming system of the first aspect, the processor may be configured to: generate a first sub-image including the first management information and a standard figure; generate the first image by composing a first main image and the first sub-image; generate a second sub-image including the second management information and the standard figure; and generate the second image by composing a second main image and the second sub-image.

According to a third aspect of the present disclosure, in the image forming system of the second aspect, the first management information may be a figure having a pattern representing the first correction amount, and the second management information may be a figure having a pattern representing the second correction amount.

According to a fourth aspect of the present disclosure, in the image forming system of any one of the first to third aspects, the first management information may be included in a peripheral region in the first image, and the second management information is included in a peripheral region in the second image.

According to a fifth aspect of the present disclosure, in the image forming system of the fourth aspect, both the peripheral region in the first image and the peripheral region in the second image may be regions that are cut off in post-processing.

According to a sixth aspect of the present disclosure, in the image forming system of any one of the first to fifth aspects, the processor may be configured to: calculate, based on the first deviation amount and the first correction amount, a first actual deviation amount that is generated in a case where correction is not performed on an image forming position based on the first correction amount; and calculate the second correction amount based on the first actual deviation amount.

According to a seventh aspect of the present disclosure, in the image forming system of any one of the first to fifth aspects, the processor may be configured to: calculate a first actual deviation amount by subtracting the first correction amount from the first deviation amount; and calculate the second correction amount based on the first actual deviation amount.

According to an eighth aspect of the present disclosure, in the image forming system of the sixth or seventh aspect, the processor may be configured to: calculate a first smoothed actual deviation amount based on a plurality of actual deviation amounts on a time axis including the first actual deviation amount; and calculate the second correction amount based on the first smoothed actual deviation amount.

According to a ninth aspect of the present disclosure, in the image forming system of any one of the first to eighth aspects, the processor may be configured to: sequentially correct a plurality of positions for forming a plurality of images based on a plurality of scanned images while executing a print job that includes printing instructions of the plurality of images.

According to a tenth aspect of the present disclosure, there is provided a program that is executed in an image forming system including an image forming portion that forms an image on a paper, an image scanning portion that scans the image formed on the paper, and a processor that controls the image forming portion based on a scanned image obtained through scanning of the image scanning portion, the program causing the processor to execute a process comprising: specifying, based on a first scanned image that is corresponding to a first image formed on a first paper by the image forming portion and that is obtained through scanning of the image scanning portion, a first deviation amount representing a magnitude of a deviation of the first image with respect to the first paper; specifying the first correction amount for deviation correction applied when the first image is formed, based on first management information included in the first scanned image; calculating a second correction amount based on the first deviation amount and the first correction amount; embedding second management information representing the second correction amount in a second image; and correcting a position where the second image is formed on a second paper, according to the second correction amount.
According to an eleventh aspect of the present disclosure, there is provided an image forming method including: specifying, based on a first scanned image that is corresponding to a first image formed on a first paper by an image forming portion and that is obtained through scanning of an image scanning portion, a first deviation amount representing a magnitude of a deviation of the first image with respect to the first paper; specifying the first correction amount for deviation correction applied when the first image is formed, based on first management information included in the first scanned image; calculating a second correction amount based on the first deviation amount and the first correction amount; embedding second management information representing the second correction amount in a second image; and correcting a position where the second image is formed on a second paper, according to the second correction amount.

According to the image forming system according to the first aspect of the present disclosure, excellent correction of the image forming position in terms of accuracy or responsiveness is possible rather than correction based on a relative deviation amount and a previous correction amount. Further, such correction is reliably performed.

According to the image forming system according to the second aspect of the present disclosure, embedding the management information in the image is easily performed.

According to the image forming system according to the third aspect of the present disclosure, the management information can be easily and reliably extracted.

According to the image forming system according to the fourth aspect of the present disclosure, the management information does not overlap the content.

According to the image forming system according to the fifth aspect of the present disclosure, a problem caused by the residual of the management information does not occur.

According to the image forming system according to the sixth aspect of the present disclosure, correction of the image forming position based on the original deviation amount or the true deviation amount is performed.

According to the image forming system according to the seventh aspect of the present disclosure, the first actual deviation amount is easily calculated.

According to the image forming system according to the eighth aspect of the present disclosure, the image forming position is stably corrected.

According to the image forming system according to the ninth aspect of the present disclosure, the image forming position is corrected in real time.

According to the program according to the tenth aspect of the present disclosure, excellent correction of the image forming position in terms of accuracy or responsiveness is possible rather than correction based on a relative deviation amount and a previous correction amount. Further, such correction is reliably performed.
According to the image forming method according to the eleventh aspect of the present disclosure, excellent correction of the image forming position in terms of accuracy or responsiveness is possible rather than correction based on a relative deviation amount and a previous correction amount. Further, such correction is reliably performed.

### BRIEF DESCRIPTION OF THE DRAWINGS

Exemplary embodiment(s) of the present invention will be described in detail based on the following figures, wherein:
Fig. 1 is a schematic diagram showing an image forming system according to an exemplary embodiment;
Fig. 2 is a diagram showing a plurality of functions provided in a processor;
Fig. 3 is a diagram showing a composition of a main image and a sub-image;
Fig. 4 is a diagram showing an example of a deviation of an image with respect to a paper;
Fig. 5 is a diagram showing a correction amount calculation method according to a comparative example;
Fig. 6 is a diagram showing a correction result according to the comparative example;
Fig. 7 is a diagram showing a correction amount calculation method according to the exemplary embodiment;
Fig. 8 is a diagram showing a correction result according to the exemplary embodiment; and
Fig. 9 is a diagram showing an information processing method according to the exemplary embodiment.

### DETAILED DESCRIPTION OF THE INVENTION

Hereinafter, an exemplary embodiment of the present invention will be described in detail with reference to the accompanying drawings.

### (1) Outline of Exemplary Embodiment

An image forming system according to an exemplary embodiment includes an image forming portion, an image scanning portion, and a processor. The image forming portion forms an image on a paper. The image scanning portion scans the image formed on the paper to obtain a scanned image. The processor controls the image forming portion based on the scanned image obtained through scanning of the image scanning portion. Specifically, the processor specifies, based on a first scanned image that is corresponding to a first image formed on a first paper by the image forming portion and that is obtained through scanning of the image scanning portion, a first deviation amount representing a magnitude of a deviation of the first image with respect to the first paper. On the other hand, the processor specifies a first correction amount for deviation correction applied when the first image is formed, based on first management information included in the first scanned image. Moreover, the processor calculates a second correction amount for deviation correction based on the first deviation amount and the first correction amount, embeds second management information representing the second correction amount in a second image, and corrects a position where the second image is formed on a second paper according to the second correction amount.

The first deviation amount is a relative deviation amount that is generated under application of the first correction amount. Therefore, in the above configuration, in calculating the second correction amount, the first correction amount that causes a first deviation is considered together with the first deviation amount. By considering both the first deviation amount and the first correction amount, excellent correction can be performed in terms of accuracy or responsiveness.

According to the above configuration, since the first management information is included in the first image, for example, even in a case where a configuration of a paper row is changed due to a jam or the like, the first correction amount that is applied when the first image is formed can be accurately and reliably specified.

There are various types of deviation of an image with respect to a paper, and examples of deviations include a deviation in a paper conveying direction, a deviation in a direction orthogonal to the paper conveying direction, a deviation in a rotational direction, and a deviation in a scale. Even in a case of correcting any of the deviations, the good correction can be performed as described above in consideration of the first deviation amount and the first correction amount. A calculation expression for calculating the second correction amount may be switched according to the property of the deviation.

**In** the exemplary embodiment, the processor generates a first sub-image including the first management information and a standard figure and generates the first image by composing a first main image and the first sub-image. Further, the processor generates a second sub-image including second management information and a standard figure and generates the second image by composing a second main image and the second sub-image. Although the management information (at least the correction amount) is usually different for each paper, that is, different for each image, with the above configuration, the management information can be easily embedded in the image. The standard figure is a figure for specifying the deviation amount of the image with respect to the paper. A position and shape of the figure are predetermined. The management information is information including a correction amount. The management information may include other information (for example, information representing an image forming condition).

**In** the exemplary embodiment, the first management information is a figure having a pattern representing the first correction amount. The second management information is a figure having a pattern representing the second correction amount. According to this configuration, the management information can be easily and reliably extracted. The pattern of the figure is configured through encoding the management information. The management information is restored by decoding the pattern of the figure.

**In** the exemplary embodiment, the first management information is included in a peripheral region in the first image. The second management information is included in a peripheral region in the second image. Each image includes a content region and a peripheral region surrounding the content region. **In** general, the content region is a main region including a content (an image entity such as a text, a figure, or a photograph), and the peripheral region is a margin region not including a content. According to the above configuration, overlapping the management information on top of the content can be avoided.

**In** the exemplary embodiment, both the peripheral region in the first image and the peripheral region in the second image are regions to be cut off in post-processing. The post-processing is processing executed in a post-processing apparatus provided in a subsequent stage of the image scanning portion. By cutting off, that is, trimming the peripheral region, a problem caused by the residual of the management information does not occur. **In** other words, the above configuration is used to utilize the peripheral region to be finally cut off as an embedding region of the management information.

In the exemplary embodiment, the processor calculates, based on the first deviation amount and the first correction amount, a first actual deviation amount that is generated in a case where correction is not performed on an image forming position based on the first correction amount. Further, the processor calculates the second correction amount based on the first actual deviation amount. The actual deviation amount corresponds to an original deviation amount or a true deviation amount. However, strictly matching between the actual deviation amount and the true deviation amount is not required. By setting the actual deviation amount as a basis, there is no need to set the previous correction amount as a basis for calculating the current correction amount (that is, the second correction amount). The calculation of the first actual deviation amount and the calculation of the second correction amount may be integrated. For example, the second correction amount may be calculated by executing a calculation expression including the calculation of the first actual deviation amount. By executing the calculation of the first actual deviation amount and the calculation of the second correction amount in stages and then storing the first actual deviation amount, the first actual deviation amount can be reused.

In the exemplary embodiment, the processor calculates the first actual deviation amount by subtracting a first correction amount from the first deviation amount and calculates the second correction amount based on the first actual deviation amount. According to this configuration, the first actual deviation amount can be easily obtained. The subtraction is a typical method for adapting to various deviations. Depending on the type of the deviation, other calculations (for example, division) using the first deviation amount and the first correction amount may be executed. As described above, the calculation of the first actual deviation amount and the calculation of the second correction amount may be collectively executed or may be separately executed.

In the exemplary embodiment, the processor calculates a first smoothed actual deviation amount based on a plurality of actual deviation amounts on a time axis including the first actual deviation amount. Further, the processor calculates the second correction amount based on the first smoothed actual deviation amount. The deviation amount is changed over time. By using the first smoothed actual deviation amount, the influence of the change in deviation amount over time is reduced. The first smoothed actual deviation amount may be further multiplied by a coefficient for gain adjustment or a coefficient for response adjustment. The smoothed actual deviation amount may be obtained as an average value of the plurality of actual deviation amounts, or the smoothed actual deviation amount may be obtained by applying other smoothing calculations with respect to the plurality of actual deviation amounts.

**In** the exemplary embodiment, the processor sequentially corrects a plurality of positions for forming a plurality of images based on a plurality of scanned images while executing a print job that includes printing instructions of the plurality of images. The above configuration is for performing real-time correction of an image forming position through feedback control from a downstream side to an upstream side.

A program, which is executed by the above processor, may be installed in the image forming system via a network or via a portable storage medium. The image forming system may be configured with one apparatus or a plurality of apparatuses from a physical perspective. The apparatuses may be connected to each other via a network. The image forming system is an information processing apparatus. The image forming system includes a non-transitory storage medium storing the above program.

### (2) Detail of Exemplary Embodiment

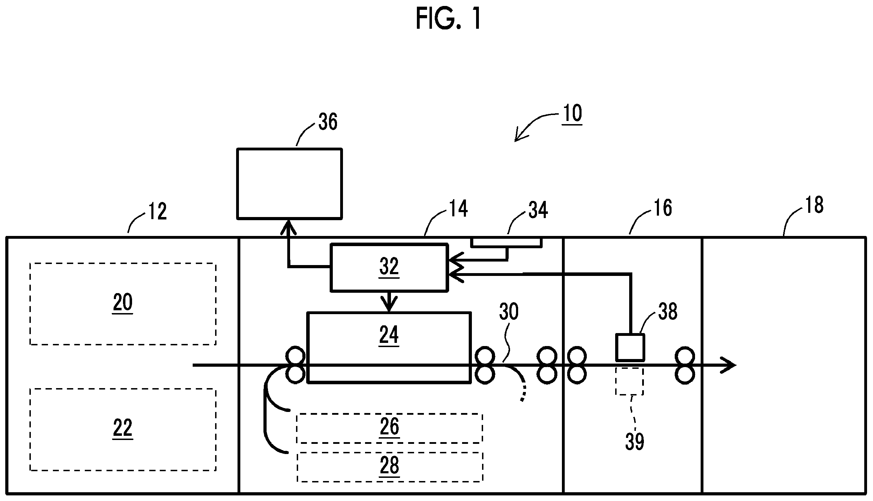

Fig. 1 shows a configuration example of the image forming system according to the exemplary embodiment. The image forming system 10 shown in the drawing sequentially forms a plurality of images on a plurality of papers and has a function of correcting the image forming position in real time through feedback control. The correction of the image forming position is also called registration correction or registration adjustment.

**In** Fig. 1, the image forming system 10 consists of a paper feeding apparatus 12, an image forming apparatus 14, an examination apparatus 16, and a post-processing apparatus 18. **In** the correction of the image forming position, at least the image forming apparatus 14 and the examination apparatus 16 function to correct the image forming position. The examination apparatus 16 may be incorporated in the image forming apparatus 14.

The paper feeding apparatus 12 includes two paper feeding trays 20 and 22. Each of the paper feeding trays 20 and 22 is a large paper feeding tray and can accommodate, for example, several thousand papers. The plurality of papers are sequentially supplied from the paper feeding apparatus 12 to the image forming apparatus 14. Each individual paper is a medium on which an image is formed.

The image forming apparatus 14 includes an image forming portion 24. In the exemplary embodiment, the image forming portion 24 is an image forming engine that forms each image on each paper in accordance with an electrophotographic method. More specifically, the image forming portion 24 includes a rotating intermediate transfer belt, and a plurality of photosensitive body units. The plurality of photosensitive body units are arranged in a movement direction of the intermediate transfer belt. A plurality of color toner images are sequentially transferred to the intermediate transfer belt by the plurality of photosensitive body units. As a result, the multiple toner images, which are generated by the above-described process, are transferred from the intermediate transfer belt to the paper. The image may be formed on the paper by using a method other than the electrophotographic method (for example, an ink jet method).

The image forming apparatus 14 includes paper feeding trays 26 and 28. As necessary, the plurality of papers are sequentially supplied from the paper feeding trays 26 and 28 to the image forming portion 24. The capacities of the respective paper feeding trays 26 and 28 are smaller than the capacities of the respective paper feeding trays 20 and 22. A reference numeral 30 denotes a paper conveyance path. The paper conveyance path 30 is provided over the paper feeding apparatus 12, the image forming apparatus 14, the examination apparatus 16, and the post-processing apparatus 18. In Fig. 1, the left side of the paper conveyance path 30 is the upstream side, and the right side thereof is the downstream side.

The image forming apparatus 14 includes a control portion 32. The control portion 32 controls an operation of each element in the image forming system 10. Image data is sequentially transferred from the control portion 32 to the image forming portion 24. The control portion 32 controls an operation of the image forming portion 24. That is, the control portion 32 controls the formation of each image on each paper. The control of the control portion 32 includes a deviation correction control in real time. The control portion 32 corrects various deviations of the image with respect to the paper. The correction of the deviation will be described in detail later.

The control portion 32 includes a processor that executes a program. The processor is, for example, a CPU. An operation panel 34 and a displayer 36 are connected to the control portion 32. The operation panel 34 is, for example, a screen panel with a touch sensor. Another input device may be connected to the control portion 32. The displayer 36 is, for example, a liquid crystal displayer. The entire or a part of the control portion 32 may be provided outside the image forming apparatus 14.

**In** general, the control portion 32 is connected to the information processing apparatus via a network and executes a print job sent from the information processing apparatus. The print job includes a plurality of images and printing instructions for the plurality of images. Hereinafter, in some cases, each input image is referred to as a main image.

The control portion 32 generates a composite image for each main image by composing a sub-image with the main image. The composite image is formed on the paper. The sub-image has a standard figure for post-specifying various deviation amounts. Specifically, the standard figure is a plurality of marks. Such a mark is also called a register mark. Further, the sub-image includes the management information including information that represents a plurality of correction amounts applied during image formation. Specifically, the management information is embedded in the sub-image as a two-dimensional barcode as a two-dimensional figure. Of course, the management information having another form may be embedded in the sub-image. The image forming apparatus 14 includes a return paper conveyance path that is used in a case of forming an image on a back side of the paper, but the return paper conveyance path is not shown.

The examination apparatus 16 scans the image to examine the image formed on each paper. Specifically, the examination apparatus 16 includes an image sensor 38. The image sensor 38 corresponds to the image scanning portion. The image sensor 38 is an in-line sensor provided on the paper conveyance path 30. The image sensor 38 includes, for example, a plurality of detection elements arranged in a direction (hereinafter, also referred to as a horizontal direction in some cases) orthogonal to the paper conveying direction (hereinafter, also referred to as a vertical direction in some cases). A scanner that scans the image through laser scanning in a horizontal direction may be used as the image sensor 38. An image scanning device other than the above may be used as the image sensor 38.

The image sensor 38 is provided on the downstream side of the image forming portion 24 on the paper conveyance path 30. In the configuration example shown in the drawing, a scanned image (accurately, scanned image data) obtained through scanning of the image sensor 38 is transmitted to the control portion 32.

The examination apparatus 16 includes an image sensor 39 in addition to the image sensor 38. The image formed on a front side of the paper is scanned by the image sensor 38. The image formed on a back side of the paper is scanned by the image sensor 39. Regarding the correction of the image forming position, a flow of correction processing applied to the front side of the paper and a flow of correction processing applied to the back side of the paper are basically identical. Therefore, hereinafter, the correction processing applied to the front side of the image will be described.

The post-processing apparatus 18 includes a plurality of post-processing functions such as a trimming function, a folding function, and a punching function. In the post-processing apparatus 18, normally, a peripheral region of the paper is cut off for each paper. The peripheral region is a region surrounding a content region and is a margin region where a plurality of marks or the like are formed. The content region is a region where an image entity such as a text, a figure, or a photograph is formed. The sub-image is, for example, an image for forming a plurality of marks, a two-dimensional barcode, and the like with respect to a peripheral region of the paper. An apparatus including a discharge tray or a discharge stacker is usually provided in a subsequent stage of the post-processing apparatus 18.

The operation of the image forming system 10 will be summarized. A plurality of image-formed papers are sequentially discharged from the image forming portion 24 to a downstream side of the image forming portion 24. Each image includes a standard figure and the management information. The image sensor 38 sequentially scans the plurality of images formed on the plurality of papers. A plurality of scanned images generated through scanning are sequentially transmitted from the image sensor 38 to the control portion 32. The control portion 32 analyzes the scanned images for each scanned image. Specifically, the control portion 32 calculates a plurality of deviation amounts for each scanned image and specifies a plurality of correction amounts. The control portion 32 corrects the image forming position with respect to the paper based on the plurality of deviation amounts and the plurality of correction amounts.

Examples of the plurality of deviations include a positional deviation due to an image shift in the vertical direction, a positional deviation due to an image shift in the horizontal direction, a positional deviation due to image rotation, a positional deviation due to a scale deviation, and the like. In practice, although the control portion 32 has a function of collectively correcting the positional deviations described above, in order to facilitate understanding of the configuration and the operation and effects of the functions according to the exemplary embodiment, hereinafter, only one type of deviation and correction corresponding to the deviation will be described.

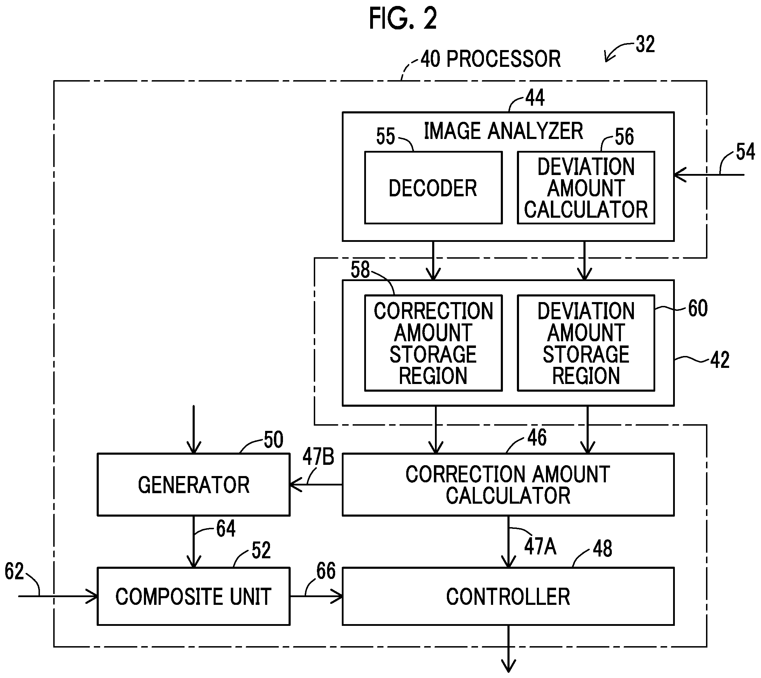

Fig. 2 shows a configuration example of the control portion 32. The control portion 32 includes a processor 40 and a memory 42. The memory 42 is configured with a single memory or a plurality of memories from a physical perspective. In Fig. 2, a plurality of functions exerted by the processor 40 are represented with a plurality of blocks. The processor 40 functions as an image analyzer 44, a correction amount calculator 46, a controller 48, a generator 50, and a composite unit 52. In Fig. 2, the configuration that is not directly related to the correction of the image forming position is not shown.

The image analyzer 44 includes a decoder 55 and a deviation amount calculator 56. The decoder 55 extracts the two-dimensional bar code included in the scanned image 54 for each scanned image 54, decodes the extracted two-dimensional bar code, and restores the management information through the decoding. The management information includes information indicating the correction amount applied during the image formation. The decoder 55 specifies the correction amount. In the shown configuration example, the specified correction amount is stored in the memory 42.

The deviation amount calculator 56 calculates the deviation amount of the image with respect to the paper by analyzing the scanned image 54 for each scanned image 54. Specifically, the deviation amount calculator 56 calculates the deviation amount by comparing positions of the plurality of marks included in the scanned image with a plurality of reference positions. The deviation amount is a relative deviation amount that is generated under the correction of the image forming position. In the shown configuration example, the calculated deviation amount is stored in the memory 42.

The memory 42 includes a correction amount storage region 58 and a deviation amount storage region 60. The correction amounts, which are applied to each paper during the image formation, are stored in the correction amount storage region 58. More specifically, the correction amount storage region 58 is for storing the plurality of correction amounts arranged in order of paper numbers. The deviation amount storage region 60 stores the deviation amount calculated from each scanned image. More specifically, the deviation amount storage region 60 is for storing the plurality of deviation amounts arranged in the order of paper numbers.

The processor 40 manages a correspondence relationship between the plurality of stored correction amounts and the plurality of stored deviation amounts. That is, the correction amount, which is applied to the specific paper during the image formation, and the deviation amount of the image, which is formed on the specific paper, are associated with each other. A management mechanism other than the processor 40 may manage a correspondence relationship between the plurality of correction amounts and the plurality of deviation amounts. Each of the correction amount storage region 58 and the deviation amount storage region 60 has, for example, a ring buffer structure or a stack structure.

The correction amount calculator 46 specifies an actual deviation amount based on the correction amount and the deviation amount, which are in the correspondence relationship, and calculates the current correction amount based on the actual deviation amount. In practice, the correction amount calculator 46 calculates a smoothed actual deviation amount based on the plurality of correction amounts arranged on the time axis and the plurality of deviation amounts arranged on the time axis and calculates the current correction amount based on the smoothed actual deviation amount. The calculation of the correction amount will be described in detail later. The current correction amount is transmitted to the controller 48 (see reference numeral 47A) and is transmitted to the generator 50 (see reference numeral 47B). Although storing the current correction amount for later use can be also considered, in a case where the current correction amount is embedded in the image, for example, even though jamming occurs and the configuration of the paper row on the paper conveyance path is changed, the correction amount and the deviation amount can be reliably associated with each other.

The correction amount may be used in the post-processing. For example, a trimming position may be determined based on the correction amount after the correction amount is specified through scanning of the two-dimensional bar code.

The controller 48 controls the operation of the image forming portion, and specifically corrects the image forming position based on the correction amount such that the deviation of the image with respect to the paper is resolved or reduced. The correction of the image forming position may include correction by mechanical control, in addition to correction by electronic control.

The generator 50 generates the sub-image 64 including the plurality of marks and the two-dimensional bar code. Since the correction amount differs for each image formation, the generator 50 generates the sub-image 64 for each image formation. The composite unit 52 composes the sub-image 64 with the input image, that is, the main image 62 and generates a composite image 66. The composite image 66 is transmitted to the image forming portion through the controller 48 in the shown configuration example.

For example, in a case where a previous paper, which is a scanning target, is represented as a first paper and the scanned image, which is obtained through scanning of the image on the first paper, is represented as a first scanned image, the first correction amount and the first deviation amount are specified by analyzing the first scanned image. The correction amount calculator 46 calculates the first actual deviation amount based on the first correction amount and the first deviation amount and calculates a second correction amount, which is the current correction amount, based on the first actual deviation amount. **In** a case where an image formation is performed on the second paper, which is a subsequent paper, the correction of the image forming position is performed based on the second correction amount. **In** practice, as will be described later, the correction amount calculator 46 calculates a first smoothed actual deviation amount based on the plurality of actual deviation amounts including the first actual deviation amount and calculates a second correction amount based on the first smoothed actual deviation amount.

The actual deviation amount is a deviation amount that is generated in a case where the correction of the image forming position is not performed, that is, an original deviation amount or a true deviation amount estimated through the calculation. The actual deviation amount may be represented as an estimated actual deviation amount. The actual deviation amount only needs to be close to the true deviation amount, and strictly matching between the actual deviation amount and the true deviation amount is not required. The smoothed actual deviation amount is obtained by applying a smoothing calculation to the plurality of actual deviation amounts arranged on the time axis. Examples of the smoothing calculation include an average value calculation, a weighted average value calculation, and the like.

For example, 4 or 5 image-formed papers are present between the first paper, which is a scanning target, and the second paper, which is an image formation target. Each of the papers may be referred to as a waiting paper as viewed from the image sensor side. Since a difference, that is, a time difference between the image formation time and the image scan time, is usually changed depending on paper size, paper conveyance speed, or the like, the number of waiting papers is also changed depending on factors described above.

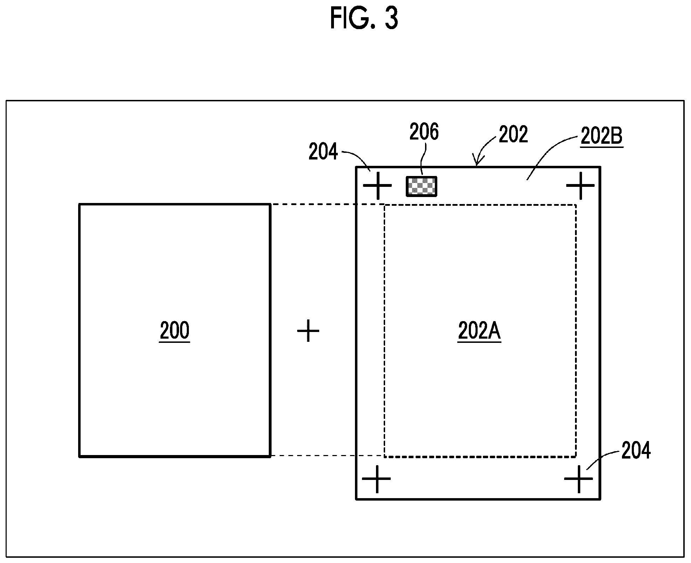

Fig. 3 shows the composition of the main image 200 and the sub-image 202. The main image 200 is an input image. The sub-image 202 includes a first region 202A corresponding to a content region and a second region 202B corresponding to a surrounding region. In the example shown in the drawing, the main image 200 is composed with the first region 202A. The second region 202B includes a plurality of marks 204 and includes a two-dimensional barcode 206. The two-dimensional barcode 206 is generated by encoding the management information as described above. The composite image is formed on the paper. The formation of the image may be referred to as printing the image.

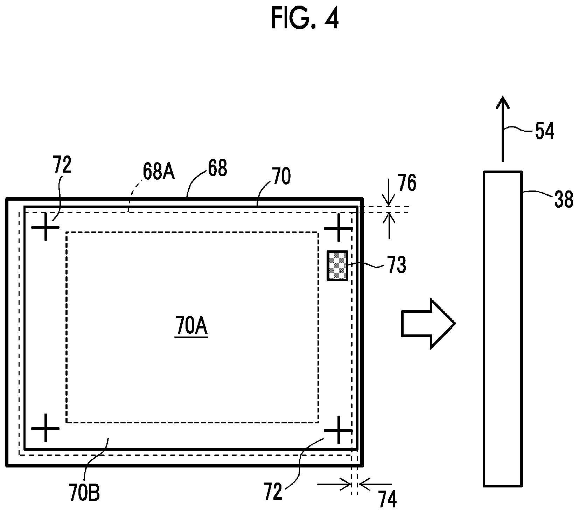

Fig. 4 schematically shows an example of the deviation. An image 70 is formed on the paper 68. The reference numeral 68A denotes a correct image formation region. A plurality of marks 72 are included in a peripheral region in the image 70, and a two-dimensional barcode 73 is included. In Fig. 4, the right-left direction is the paper conveying direction, that is, the vertical direction. A direction orthogonal to the vertical direction is the horizontal direction.

The image 70 is deviated with respect to the paper 68. Specifically, the reference numeral 74 denotes the deviation amount in the vertical direction, and the reference numeral 76 denotes the deviation amount in the horizontal direction. The image 70 is scanned by the image sensor 38 during the conveyance of the paper 68, and the scanned image 54 is generated through the scanning. The scanned image 54 is transmitted to the control portion. In the control portion, a position of each mark in the scanned image 54 is analyzed, and then the deviation amount 74 in the vertical direction and the deviation amount 76 in the horizontal direction are specified. Further, in the control portion, the two-dimensional bar code included in the scanned image 54 is decoded, and the management information is extracted from the scanned image 54 through the decoding.

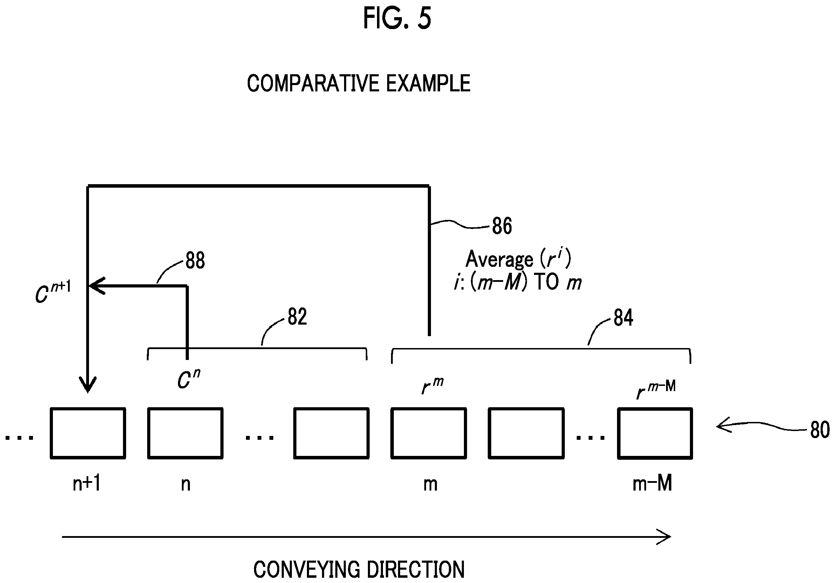

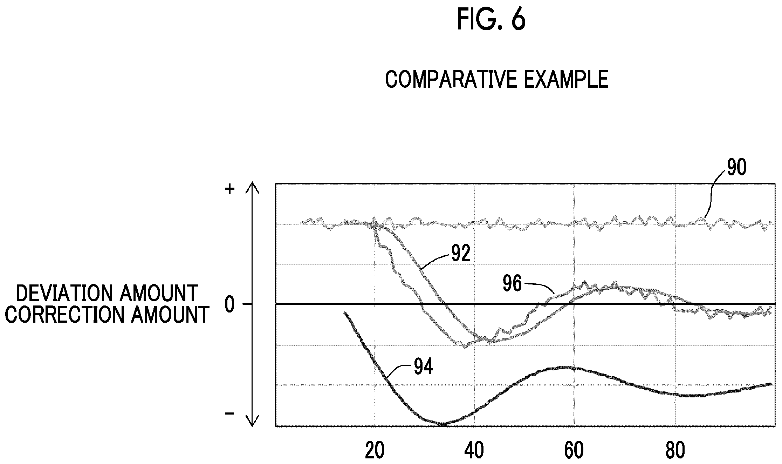

The feedback control according to a comparative example will be described with reference to Figs. 5 and 6. In Fig. 5, the right-left direction is the paper conveying direction. A plurality of papers configuring a paper row 80 are arranged in the paper conveying direction. "n" indicates a number of the paper immediately after the image formation. The correction amount applied to the paper during the image formation is Cⁿ. "n+1" indicates a number of the paper on which an image is to be formed. "m" indicates a number of the paper immediately after the image is scanned. The deviation amount, which is calculated through the scanning, is r^{m}. The deviation amount corresponding to the paper specified at "m-M" is r^{m-M}.

The reference numeral 82 denotes a plurality of papers waiting to be scanned, and the reference numeral 84 denotes a movement average period. The average (rⁱ) indicates a movement average value, which is an average value of "M+1" deviation amounts belonging to the movement average period 84. "i" takes a value from "m-M" to "m".

In the comparative example, the current correction amount Cⁿ⁺¹ is calculated according to Expression (1) below. ${C}^{n + 1} = - G ⋅ {Average}_{i : \left(m-M\right) ∼ m} \left({r}^{i}\right) + {C}^{n}$

In the above Expression (1), "G" is a gain, which is a coefficient for adjusting a response. The first term on the right side includes the above-described movement average value. Since the deviation amount is changed over time, the deviation amount is smoothed in order to stably calculate the correction amount. The second term on the right side is the previous correction amount.

In Fig. 5, the reference numeral 86 denotes a reference of the smoothed deviation amount, and the reference numeral 88 denotes a reference of the previous correction amount. In a case where the current correction amount is calculated based on the previous correction amount, the current correction amount is likely to be influenced by the previous correction amount. In the above Expression (1), since a phase difference is present between the first term and the second term on the right side, the responsiveness is a problem in calculating the current correction amount. According to the comparative example, in a case where a state change such as jamming occurs, the influence due to the state change is likely to remain for a long time.

Fig. 6 shows a correction result according to the comparative example. Here, in Expression (1), 10 is substituted for "M", and 0.1 is substituted for "G". The horizontal axis indicates the number of papers, which corresponds to the time axis. The vertical axis indicates the deviation amount and the correction amount.

A waveform 90 shows a change in deviation amount that is generated in a case where the correction is not performed. A waveform 92 shows a change in smoothed deviation amount in a case where the correction is performed. A waveform 94 shows a change in correction amount calculated based on the smoothed deviation amount. A waveform 96 shows a change in deviation amount after correction. According to the comparative example, as shown in the waveform 96, although the deviation amount converges to 0 with the passage of time, the deviation amount is relatively largely changed in a plus direction and a minus direction over a period until the convergence. That is, poor responsiveness can be seen.

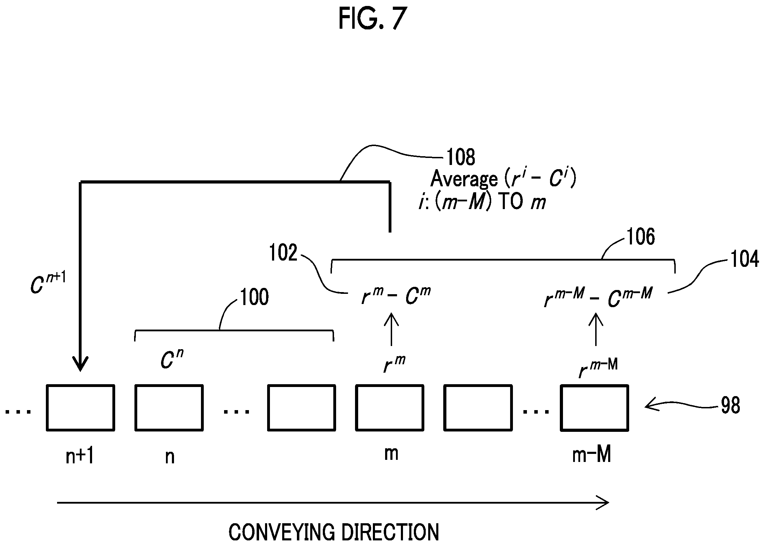

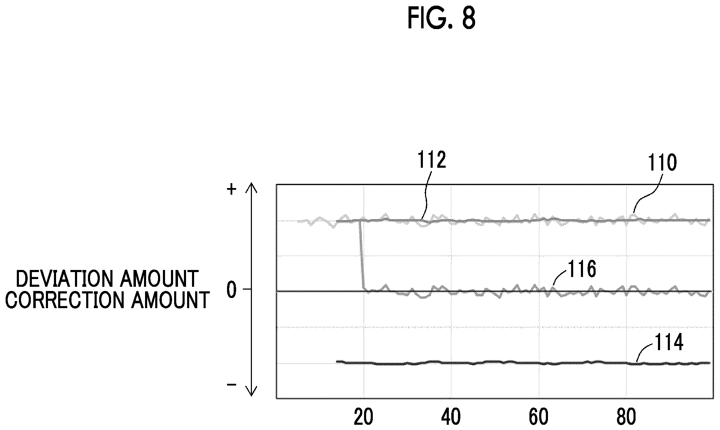

Next, feedback control according to the exemplary embodiment will be described with reference to Figs. 7 and 8. In Fig. 7, the right-left direction is the paper conveying direction. A plurality of papers configuring a paper row 98 are arranged in the paper conveying direction. "n" indicates a number of the paper immediately after the image formation. The correction amount applied to the paper during the image formation is Cⁿ. "n+1" indicates a number of the paper on which an image is to be formed. "m" indicates a number of the paper immediately after the image is scanned. The deviation amount, which is calculated through the scanning, is r^{m}, and the correction amount, which is specified through the scanning, is C^{m}. The deviation amount, which is corresponding to the paper specified at "m-M", is r^{m-M}, and the correction amount, which is corresponding to the paper, is C^{m-M}

The reference numeral 100 denotes the plurality of papers waiting to be scanned. In the exemplary embodiment, the actual deviation amount is calculated by subtracting the correction amount from the deviation amount for each paper. The actual deviation amount is a deviation amount that is generated in a case where the correction of the image forming position is not performed and corresponds to the original deviation amount or the true deviation amount. The reference numeral 102 denotes the actual deviation amount r^{m1}-C^{m} corresponding to the paper specified at "m". The reference numeral 104 denotes the actual deviation amount r^{m-M}-C^{m-M} corresponding to the paper specified at "m-M".

The reference numeral 106 indicates the movement average period. The average (rⁱ-Cⁱ) indicates the movement average value, and specifically, is an average value of "M+1" actual deviation amounts belonging to the movement average period 106. The movement average is one of the smoothing methods, and the movement average value may be referred to as the smoothed actual deviation amount. "i" takes a value from "m-M" to "m".

Specifically, the current correction amount Cⁿ⁺¹ is calculated according to the Expression (2) below. ${C}^{n + 1} = - G ⋅ {Average}_{i : \left(m-M\right) ∼ m} \left({r}^{i}-{C}^{i}\right)$

In the above Expression (2), "G" is a gain, which is a coefficient for adjusting a response. The right side includes the above-described movement average value (that is, the smoothed actual deviation amount). Since the deviation amount is changed over time, the deviation amount is smoothed in order to stably calculate the correction amount. The above Expression (2) does not include the previous correction amount. As a result, a problem of the influence of the previous correction amount remaining or a problem of the response delay is avoided. "G" may be changed stepwise depending on "n". For example, "G" may be changed from 0 (0%) to 1 (100%) from the first paper to the twentieth paper. In the above Expression (2), one may be substituted for "G", and in this case, Expression (2) becomes simpler. The numerical value given to "G" may be changed depending on a status. For example, the numerical value given to "G" may be changed according to the number of papers waiting to be scanned or the time difference from the image formation time to the image scan time.

In Fig. 7, the reference numeral 108 denotes a reference of the smoothed actual deviation amount. The current correction amount Cⁿ⁺¹ is calculated based on the smoothed actual deviation amount. In a case where the calculation is performed, the reference to the previous correction amount Cⁿ is not necessary.

Fig. 8 shows a correction result according to the exemplary embodiment. Here, in Expression (2), ten is substituted for "M" and one is substituted for "G". The horizontal axis indicates the number of papers, which corresponds to the time axis. The vertical axis indicates the deviation amount and the correction amount.

A waveform 110, which includes a large number of fine waves, indicates a change in actual deviation amount. A flat waveform 112 indicates a change in smoothed actual deviation amount. A waveform 114 indicates a change in correction amount. A waveform 116, which includes a large number of fine waves, indicates a change in deviation amount.

According to the exemplary embodiment, as shown in the waveform 116, the deviation amount converges to zero immediately, and a convergence state is maintained thereafter. The residual of the previous correction amount is not recognized, and the responsiveness is extremely good. As a result, the accuracy of the correction of the image forming position is improved.

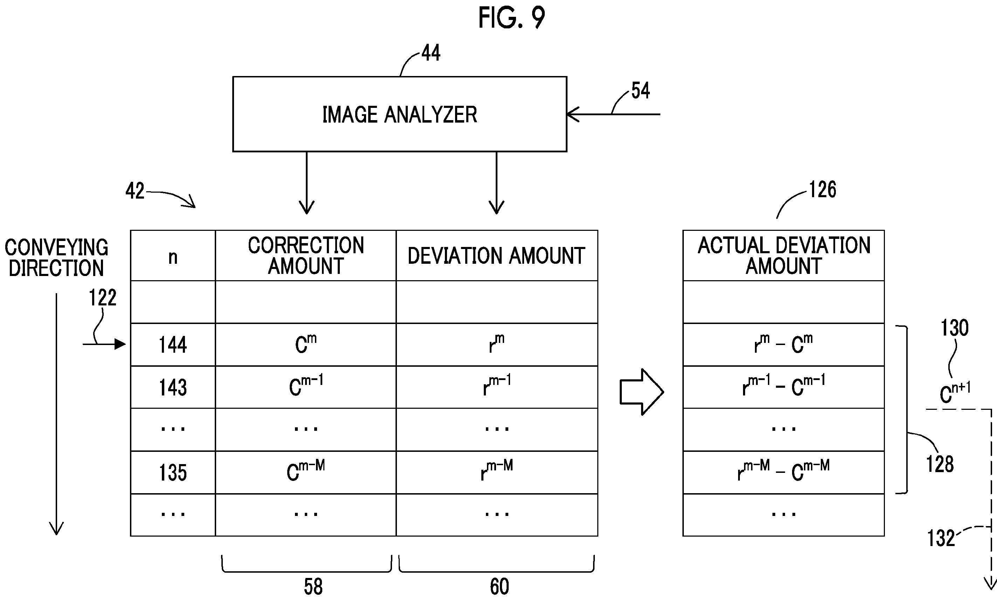

Fig. 9 schematically shows the information processing method according to the exemplary embodiment. The image analyzer 44 specifies the correction amount and the deviation amount by analyzing the scanned image for each scanned image 54. The specified correction amount and deviation amount are stored in the memory 42.

As described using Fig. 1, the memory 42 includes the correction amount storage region 58 and the deviation amount storage region 60. "n" indicates the paper number. The conveying direction corresponds to the time axis. A plurality of correction amounts are stored in the correction amount storage region 58 along the time axis. In the example shown in the drawing, the plurality of correction amounts are associated with the paper numbers. The deviation amount storage region 60 stores the plurality of deviation amounts along the time axis. In the example shown in the drawing, the plurality of deviation amounts are also associated with the paper numbers.

The reference numeral 122 denotes time when the scanning is completed. The reference numeral 126 denotes the plurality of actual deviation amounts corresponding to the plurality of papers. A region for storing the plurality of actual deviation amounts may be provided on the memory 42. In a case where such a configuration is adopted, the calculated actual deviation amount can be reused, so that the calculation amount can be reduced.

The current correction amount 130 is calculated based on "M+1" actual deviation amounts belonging to the movement average period 128. The current correction amount 130 is used for controlling the image forming position (see the reference numeral 132). The above-described process is repeated for each paper.

In the above-described exemplary embodiment, in calculating the smoothed actual deviation amount, first, the average value of the plurality of correction amounts and the average value of the plurality of deviation amounts may be calculated, and then a difference between the two average values may be calculated. In the above-described exemplary embodiment, in a case where a scale deviation is corrected, a division based on the correction amount and the deviation amount may be performed.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the appended claims.

### Brief Description of the Reference Symbols

10: image forming system
14: image forming apparatus
16: examination apparatus
24: image forming portion
30: paper conveyance path
32: control portion
38: image sensor
40: processor
42: memory
44: image analyzer
46: correction amount calculator
48: controller
50: generator
52: composite unit
55: decoder
56: deviation amount calculator

## Claims

1. An image forming system (10) comprising:
an image forming portion (24) that forms an image on a paper;
an image scanning portion (38) that scans the image formed on the paper; and
a processor (40) that controls the image forming portion (24) based on a scanned image obtained through scanning of the image scanning portion (38),
wherein the processor (40) is configured to:
generate a first sub-image (64, 202) including first management information and a standard figure, wherein the standard figure comprises a plurality of register marks (204, 72) for post-specifying various deviation amounts, and the first management information includes information representing a first correction amount applied during image formation and is embedded in the first sub-image (64, 202) as a two-dimensional barcode (206, 73);
generate a first image (66, 70) by composing a first main image (62, 200) and the first sub-image (64, 202);
specify, based on a first scanned image (54) that is corresponding to the first image (66, 70) formed on a first paper (68) by the image forming portion (24) and that is obtained through scanning of the first image (66, 70) by the image scanning portion (38), a first deviation amount (74, 76) representing a magnitude of a deviation of the first image (66, 70) with respect to the first paper (68), wherein the first deviation amount (74, 76) is calculated by comparing positions of the plurality of register marks (204, 72) included in the first scanned image (54) with a plurality of reference positions; and
specify the first correction amount for deviation correction applied when the first image (66, 70) is formed, based on the first management information restored through extracting and decoding the two-dimensional bar code (206, 73) included in the first scanned image (54);
the image forming system (10) being **characterized in that** the processor (40) is further configured to:
calculate, based on the first deviation amount (74, 76) and the first correction amount, a first actual deviation amount (102, 104) that is generated in a case where correction is not performed on an image forming position based on the first correction amount, the first actual deviation amount (102, 104) being calculated by subtracting the first correction amount from the first deviation amount (74, 76);
calculate a second correction amount (130) based on the first actual deviation amount (102, 104);
embed second management information, wherein the second management information is a figure having a pattern representing the second correction amount (130) in a second image,
generate a second sub-image including the second management information and the standard figure;
generate the second image by composing a second main image and the second sub-image; and
correct a position where the second image is formed on a second paper, according to the second correction amount (130).

2. The image forming system (10) according to claim 1,
wherein the first management information is included in a peripheral region (202B) in the first image (66, 70), and
the second management information is included in a peripheral region in the second image.

3. The image forming system (10) according to claim 2,
wherein both the peripheral region in the first image and the peripheral region in the second image are regions that are cut off in post-processing.

4. The image forming system (10) according to claim 1, wherein the processor is configured to:
calculate a first smoothed actual deviation amount (108) based on a plurality of actual deviation amounts (126) on a time axis including the first actual deviation amount; and
calculate the second correction amount (130) based on the first smoothed actual deviation amount (108).

5. The image forming system (10) according to any one of claims 1 to 4, wherein the processor is configured to:
sequentially correct a plurality of positions for forming a plurality of images based on a plurality of scanned images while executing a print job that includes printing instructions of the plurality of images.

6. A program that is executed in an image forming system (10) including an image forming portion (24) that forms an image on a paper, an image scanning portion (38) that scans the image formed on the paper, and a processor (40) that controls the image forming portion (24) based on a scanned image obtained through scanning of the image scanning portion (38), the program causing the processor (40) to execute a process comprising:
generating a first sub-image (64, 202) including first management information and a standard figure, wherein the standard figure comprises a plurality of register marks (204, 72) for post-specifying various deviation amounts, and the first management information includes information representing a first correction amount applied during image formation and is embedded in the first sub-image (64, 202) as a two-dimensional barcode (206, 73);
generating a first image (66, 70) by composing a first main image (62, 200) and the first sub-image (64, 202);
specifying, based on a first scanned image (54) that is corresponding to the first image (66, 70) formed on a first paper (68) by the image forming portion (24) and that is obtained through scanning of the first image (66, 70) by the image scanning portion (38), a first deviation amount (74, 76) representing a magnitude of a deviation of the first image (66, 70) with respect to the first paper (68), wherein the first deviation amount (74, 76) is calculated by comparing positions of the plurality of register marks (204, 72) included in the first scanned image (54) with a plurality of reference positions; and
specifying the first correction amount for deviation correction applied when the first image (66, 70) is formed, based on the first management information restored through extracting and decoding the two-dimensional bar code (206, 73) included in the first scanned image (54);
the program being **characterized in that** the program causes the processor (40) to execute a process comprising:
calculating, based on the first deviation amount (74, 76) and the first correction amount, a first actual deviation amount (102, 104) that is generated in a case where correction is not performed on an image forming position based on the first correction amount, the first actual deviation amount (102, 104) being calculated by subtracting the first correction amount from the first deviation amount (74, 76);
calculating a second correction amount (130) based on the first actual deviation amount (102, 104);
embedding second management information, wherein the second management information is a figure having a pattern representing the second correction amount (130) in a second image,
generating a second sub-image including the second management information and the standard figure;
generating the second image by composing a second main image and the second sub-image; and
correcting a position where the second image is formed on a second paper, according to the second correction amount (130).

7. An image forming method comprising:
generating a first sub-image (64, 202) including first management information and a standard figure, wherein the standard figure comprises a plurality of register marks (204, 72) for post-specifying various deviation amounts, and the first management information includes information representing a first correction amount applied during image formation and is embedded in the first sub-image (64, 202) as a two-dimensional barcode (206, 73);
generating a first image (66, 70) by composing a first main image (62, 200) and the first sub-image (64, 202);
specifying, based on a first scanned image (54) that is corresponding to the first image (66, 70) formed on a first paper (68) by an image forming portion (24) and that is obtained through scanning of the first image (66, 70) an image scanning portion (38), a first deviation amount (74, 76) representing a magnitude of a deviation of the first image (66, 70) with respect to the first paper (68), wherein the first deviation amount (74, 76) is calculated by comparing positions of the plurality of register marks (204, 72) included in the first scanned image (54) with a plurality of reference positions; and
specifying the first correction amount for deviation correction applied when the first image (66, 70) is formed, based on the first management information restored through extracting and decoding the two-dimensional bar code (206, 73) included in the first scanned image (54);
the image forming method being **characterized in**:
calculating, based on the first deviation amount (74, 76) and the first correction amount, a first actual deviation amount (102, 104) that is generated in a case where correction is not performed on an image forming position based on the first correction amount, the first actual deviation amount (102, 104) being calculated by subtracting the first correction amount from the first deviation amount (74, 76);
calculating a second correction amount (130) based on the first actual deviation amount (102, 104);
embedding second management information, wherein the second management information is a figure having a pattern representing the second correction amount (130) in a second image,
generating a second sub-image including the second management information and the standard figure;
generating the second image by composing a second main image and the second sub-image; and
correcting a position where the second image is formed on a second paper, according to the second correction amount (130).

## Patentansprüche

1. Bilderzeugungssystem (10), umfassend:
einen Bilderzeugungsabschnitt (24), der ein Bild auf einem Papier erzeugt;
einen Bildabtastabschnitt (38), der das auf dem Papier erzeugte Bild abtastet; und
einen Prozessor (40), der den Bilderzeugungsabschnitt (24) auf der Grundlage eines gescannten Bildes, das durch Abtasten des Bildabtastabschnitts (38) erhalten wird, steuert,
wobei der Prozessor (40) so konfiguriert ist, dass er:
ein erstes Teilbild (64, 202), das erste Verwaltungsinformationen und eine Standardfigur enthält, erzeugt, wobei die Standardfigur mehrere Registermarken (204, 72) zum Nachspezifizieren verschiedener Abweichungsbeträge umfasst und die ersten Verwaltungsinformationen Informationen enthalten, die einen ersten Korrekturbetrag, der während Bilderzeugung angewendet wird, darstellen, und in dem ersten Teilbild (64, 202) als ein zweidimensionaler Barcode (206, 73) eingebettet sind;
ein erstes Bild (66, 70) durch Zusammensetzen eines ersten Hauptbildes (62, 200) und des ersten Teilbildes (64, 202) erzeugt;
auf der Grundlage eines ersten gescannten Bildes (54), das dem ersten Bild (66, 70), das auf einem ersten Papier (68) durch den Bilderzeugungsabschnitt (24) erzeugt wird, entspricht und das durch Abtasten des ersten Bildes (66, 70) durch den Bildabtastabschnitt (38) erhalten wird, einen ersten Abweichungsbetrag (74, 76), der eine Größe einer Abweichung des ersten Bildes (66, 70) in Bezug auf das erste Papier (68) darstellt, spezifiziert, wobei der erste Abweichungsbetrag (74, 76) durch Vergleichen von Positionen der mehreren Registermarken (204, 72), die in dem ersten gescannten Bild (54) enthalten sind, mit mehreren Referenzpositionen berechnet wird; und
den ersten Korrekturbetrag für Abweichungskorrektur, der angewendet wird, wenn das erste Bild (66, 70) erzeugt wird, auf der Grundlage der ersten
Verwaltungsinformationen, die durch Extrahieren und Decodieren des zweidimensionalen Barcodes (206, 73), der in dem ersten gescannten Bild (54) enthalten ist, wiederhergestellt werden, spezifiziert;
wobei das Bilderzeugungssystem (10) **dadurch gekennzeichnet ist, dass** der Prozessor (40) ferner so konfiguriert ist, dass er:
auf der Grundlage des ersten Abweichungsbetrags (74, 76) und des ersten Korrekturbetrags einen ersten tatsächlichen Abweichungsbetrag (102, 104) berechnet, der in einem Fall, in dem Korrektur an einer Bilderzeugungsposition auf der Grundlage des ersten Korrekturbetrags nicht durchgeführt wird, erzeugt wird, wobei der erste tatsächliche Abweichungsbetrag (102, 104) durch Subtrahieren des ersten Korrekturbetrags von dem ersten Abweichungsbetrag (74, 76) berechnet wird;
einen zweiten Korrekturbetrag (130) auf der Grundlage des ersten tatsächlichen Abweichungsbetrags (102, 104) berechnet;
zweite Verwaltungsinformationen in ein zweites Bild einbettet, wobei die zweiten Verwaltungsinformationen eine Figur sind, die ein Muster aufweist, das den zweiten Korrekturbetrag (130) darstellt;
ein zweites Teilbild, das die zweiten Verwaltungsinformationen und die Standardfigur enthält, erzeugt;
das zweite Bild durch Zusammensetzen eines zweiten Hauptbildes und des zweiten Teilbildes erzeugt; und
eine Position, an der das zweite Bild auf einem zweiten Papier erzeugt wird, gemäß dem zweiten Korrekturbetrag (130) korrigiert.

2. Bilderzeugungssystem (10) nach Anspruch 1,
wobei die ersten Verwaltungsinformationen in einem Umgebungsbereich (202B) in dem ersten Bild (66, 70) enthalten sind, und
die zweiten Verwaltungsinformationen in einem Umgebungsbereich in dem zweiten Bild enthalten sind.

3. Bilderzeugungssystem (10) nach Anspruch 2,
wobei sowohl der Umgebungsbereich in dem ersten Bild als auch der Umgebungsbereich in dem zweiten Bild Bereiche sind, die bei Nachverarbeitung abgeschnitten werden.

4. Bilderzeugungssystem (10) nach Anspruch 1, wobei der Prozessor so konfiguriert ist, dass er:
einen ersten geglätteten tatsächlichen Abweichungsbetrag (108) auf der Grundlage von mehreren tatsächlichen Abweichungsbeträgen (126) auf einer Zeitachse, die den ersten tatsächlichen Abweichungsbetrag enthält, berechnet; und
den zweiten Korrekturbetrag (130) auf der Grundlage des ersten geglätteten tatsächlichen Abweichungsbetrags (108) berechnet.

5. Bilderzeugungssystem (10) nach einem der Ansprüche 1 bis 4, wobei der Prozessor so konfiguriert ist, dass er:
mehrere Positionen zum Erzeugen mehrerer Bilder auf der Grundlage mehrerer gescannter Bilder sequentiell korrigiert, während ein Druckauftrag, der Druckanweisungen der mehreren Bilder enthält, ausgeführt wird.

6. Programm, das in einem Bilderzeugungssystem (10) ausgeführt wird, das einen Bilderzeugungsabschnitt (24), der ein Bild auf einem Papier erzeugt, einen Bildabtastabschnitt (38), der das auf dem Papier erzeugte Bild abtastet, und einen Prozessor (40), der den Bilderzeugungsabschnitt (24) auf der Grundlage eines gescannten Bildes, das durch Abtasten des Bildabtastabschnitts (38) erhalten wird, steuert, enthält, wobei das Programm den Prozessor (40) veranlasst, einen Prozess auszuführen, der umfasst:
Erzeugen eines ersten Teilbildes (64, 202), das erste Verwaltungsinformationen und eine Standardfigur enthält, wobei die Standardfigur mehrere Registermarken (204, 72) zum Nachspezifizieren verschiedener Abweichungsbeträge umfasst und die ersten Verwaltungsinformationen Informationen enthalten, die einen ersten Korrekturbetrag darstellen, der während Bilderzeugung angewendet wird, und in dem ersten Teilbild (64, 202) als ein zweidimensionaler Barcode (206, 73) eingebettet sind;
Erzeugen eines ersten Bildes (66, 70) durch Zusammensetzen eines ersten Hauptbildes (62, 200) und des ersten Teilbildes (64, 202);
Spezifizieren, auf der Grundlage eines ersten gescannten Bildes (54), das dem ersten Bild (66, 70), das auf einem ersten Papier (68) durch den Bilderzeugungsabschnitt (24) erzeugt wird, entspricht und das durch Abtasten des ersten Bildes (66, 70) durch den Bildabtastabschnitt (38) erhalten wird, eines ersten Abweichungsbetrags (74, 76), der eine Größe einer Abweichung des ersten Bildes (66, 70) in Bezug auf das erste Papier (68) darstellt, wobei der erste Abweichungsbetrag (74, 76) durch Vergleichen von Positionen der mehreren Registermarken (204, 72), die in dem ersten gescannten Bild (54) enthalten sind, mit mehreren Referenzpositionen berechnet wird; und Spezifizieren des ersten Korrekturbetrags für Abweichungskorrektur, der angewendet wird, wenn das erste Bild (66, 70) erzeugt wird, auf der Grundlage der ersten Verwaltungsinformationen, die durch Extrahieren und Decodieren des zweidimensionalen Barcodes (206, 73), der in dem ersten gescannten Bild (54) enthalten ist, wiederhergestellt werden;
wobei das Programm **dadurch gekennzeichnet ist, dass** das Programm den Prozessor (40) veranlasst, einen Prozess auszuführen, der umfasst:
Berechnen eines ersten tatsächlichen Abweichungsbetrags (102, 104), der in einem Fall, in dem Korrektur nicht an einer Bilderzeugungsposition auf der Grundlage des ersten Korrekturbetrags durchgeführt wird, erzeugt wird, auf der Grundlage des ersten Abweichungsbetrags (74, 76) und des ersten Korrekturbetrags, wobei der erste tatsächliche Abweichungsbetrag (102, 104) durch Subtrahieren des ersten Korrekturbetrags von dem ersten Abweichungsbetrag (74, 76) berechnet wird;
Berechnen eines zweiten Korrekturbetrags (130) auf der Grundlage des ersten tatsächlichen Abweichungsbetrags (102, 104);
Einbetten von zweiten Verwaltungsinformationen in ein zweites Bild, wobei die zweiten Verwaltungsinformationen eine Figur sind, die ein Muster aufweist, das den zweiten Korrekturbetrag (130) darstellt;
Erzeugen eines zweiten Teilbildes, das die zweiten Verwaltungsinformationen und die Standardfigur enthält;
Erzeugen des zweiten Bildes durch Zusammensetzen eines zweiten Hauptbildes und des zweiten Teilbildes; und
Korrigieren einer Position, an der das zweite Bild auf einem zweiten Papier erzeugt wird, gemäß dem zweiten Korrekturbetrag (130).

7. Bilderzeugungsverfahren, umfassend:
Erzeugen eines ersten Teilbildes (64, 202), das erste Verwaltungsinformationen und eine Standardfigur enthält, wobei die Standardfigur mehrere Registermarken (204, 72) zum Nachspezifizieren verschiedener Abweichungsbeträge umfasst und die ersten Verwaltungsinformationen Informationen enthalten, die einen ersten Korrekturbetrag darstellen, der während Bilderzeugung angewendet wird, und in dem ersten Teilbild (64, 202) als ein zweidimensionaler Barcode (206, 73) eingebettet sind;
Erzeugen eines ersten Bildes (66, 70) durch Zusammensetzen eines ersten Hauptbildes (62, 200) und des ersten Teilbildes (64, 202);
Spezifizieren eines ersten Abweichungsbetrags (74, 76), der eine Größe einer Abweichung des ersten Bildes (66, 70) in Bezug auf das erste Papier (68) darstellt, auf der Grundlage eines ersten gescannten Bildes (54), das dem ersten Bild (66, 70), das auf einem ersten Papier (68) durch einen Bilderzeugungsabschnitt (24) erzeugt wird,
entspricht und das durch Scannen des ersten Bildes (66, 70) durch einen Bildabtastabschnitt (38) erhalten wird, wobei der erste Abweichungsbetrag (74, 76) durch Vergleichen von Positionen der mehreren Registermarken (204, 72), die in dem ersten gescannten Bild (54) enthalten sind, mit mehreren Referenzpositionen berechnet wird; und
Spezifizieren des ersten Korrekturbetrags für Abweichungskorrektur, der angewendet wird, wenn das erste Bild (66, 70) erzeugt wird, auf der Grundlage der ersten Verwaltungsinformationen, die durch Extrahieren und Decodieren des zweidimensionalen Barcodes (206, 73), der in dem ersten gescannten Bild (54) enthalten ist, wiederhergestellt werden;
wobei das Bilderzeugungsverfahren **gekennzeichnet ist durch**:
Berechnen eines ersten tatsächlichen Abweichungsbetrags (102, 104), der in einem Fall, in dem Korrektur nicht an einer Bilderzeugungsposition auf der Grundlage des ersten Korrekturbetrags durchgeführt wird, erzeugt wird, auf der Grundlage des ersten Abweichungsbetrags (74, 76) und des ersten Korrekturbetrags, wobei der erste tatsächliche Abweichungsbetrag (102, 104) **durch** Subtrahieren des ersten Korrekturbetrags von dem ersten Abweichungsbetrag (74, 76) berechnet wird;
Berechnen eines zweiten Korrekturbetrags (130) auf der Grundlage des ersten tatsächlichen Abweichungsbetrags (102, 104);
Einbetten von zweiten Verwaltungsinformationen in ein zweites Bild, wobei die zweiten Verwaltungsinformationen eine Figur sind, die ein Muster aufweist, das den zweiten Korrekturbetrag (130) darstellt;
Erzeugen eines zweiten Teilbildes, das die zweiten Verwaltungsinformationen und die Standardfigur enthält;
Erzeugen des zweiten Bildes **durch** Zusammensetzen eines zweiten Hauptbildes und des zweiten Teilbildes; und
Korrigieren einer Position, an der das zweite Bild auf einem zweiten Papier erzeugt wird, gemäß dem zweiten Korrekturbetrag (130).

## Revendications

1. Système de formation d'images (10) comprenant :
une partie de formation d'images (24) qui forme une image sur un papier ;
une partie de numérisation d'images (38) qui numérise l'image formée sur le papier ; et
un processeur (40) qui contrôle la partie de formation d'images (24) sur la base d'une image numérisée obtenue par numérisation de la partie de numérisation d'images (38),
dans lequel le processeur (40) est configuré pour :
générer une première sous-image (64, 202) incluant des premières informations de gestion et une figure standard, où la figure standard comprend une pluralité de repères de registre (204, 72) pour spécifier ultérieurement diverses valeurs d'écart, et les premières informations de gestion incluent des informations représentant une première valeur de correction appliquée lors de la formation d'images et sont intégrées dans la première sous-image (64, 202) sous la forme d'un code à barres bidimensionnel (206, 73) ;
générer une première image (66, 70) en composant une première image principale (62, 200) et la première sous-image (64, 202) ;
spécifier, sur la base d'une première image numérisée (54) qui correspond à la première image (66, 70) formée sur un premier papier (68) par la partie de formation d'images (24) et qui est obtenue par numérisation de la première image (66, 70) par la partie de numérisation d'images (38), une première valeur d'écart (74, 76) représentant une amplitude d'un écart de la première image (66, 70) par rapport au premier papier (68), où la première valeur d'écart (74, 76) est calculée en comparant des positions de la pluralité de repères de registre (204, 72) incluses dans la première image numérisée (54) avec une pluralité de positions de référence ; et
spécifier la première valeur de correction pour une correction d'écart appliquée lorsque la première image (66, 70) est formée, sur la base des premières informations de gestion restaurées par extraction et décodage du code à barres bidimensionnel (206, 73) inclus dans la première image numérisée (54) ;
le système de formation d'images (10) étant **caractérisé en ce que** le processeur (40) est en outre configuré pour :
calculer, sur la base de la première valeur d'écart (74, 76) et de la première valeur de correction, une première valeur d'écart réelle (102, 104) qui est générée dans un cas où aucune correction n'est effectuée sur une position de formation d'images sur la base de la première valeur de correction, la première valeur d'écart réelle (102, 104) étant calculée en soustrayant la première valeur de correction de la première valeur d'écart (74, 76) ;
calculer une deuxième valeur de correction (130) sur la base de la première valeur d'écart réelle (102, 104) ;
intégrer des deuxièmes informations de gestion, où les deuxièmes informations de gestion sont une figure ayant un motif représentant la deuxième valeur de correction (130) dans une deuxième image ;
générer une deuxième sous-image incluant les deuxièmes informations de gestion et la figure standard ;
générer la deuxième image en composant une deuxième image principale et la deuxième sous-image ; et
corriger une position à laquelle la deuxième image est formée sur un deuxième papier, en fonction de la deuxième valeur de correction (130).

2. Système de formation d'images (10) selon la revendication 1,
dans lequel les premières informations de gestion sont incluses dans une région périphérique (202B) dans la première image (66, 70), et
les deuxièmes informations de gestion sont incluses dans une région périphérique dans la deuxième image.

3. Système de formation d'images (10) selon la revendication 2,
dans lequel à la fois la région périphérique dans la première image et la région périphérique dans la deuxième image sont des régions qui sont découpées lors d'un post-traitement.

4. Système de formation d'images (10) selon la revendication 1, dans lequel le processeur est configuré pour :
calculer une première valeur d'écart réelle lissée (108) sur la base d'une pluralité de valeurs d'écart réelles (126) sur un axe temporel incluant la première valeur d'écart réelle ; et
calculer la deuxième valeur de correction (130) sur la base de la première valeur d'écart réelle lissée (108).

5. Système de formation d'images (10) selon l'une quelconque des revendications 1 à 4, dans lequel le processeur est configuré pour :
corriger séquentiellement une pluralité de positions pour former une pluralité d'images sur la base d'une pluralité d'images numérisées tout en exécutant un travail d'impression qui inclut des instructions d'impression de la pluralité d'images.

6. Programme qui est exécuté dans un système de formation d'images (10) incluant une partie de formation d'images (24) qui forme une image sur un papier, une partie de numérisation d'images (38) qui numérise l'image formée sur le papier, et un processeur (40) qui contrôle la partie de formation d'images (24) sur la base d'une image numérisée obtenue par numérisation de la partie de numérisation d'images (38), le programme amenant le processeur (40) à exécuter un processus comprenant :
générer une première sous-image (64, 202) incluant des premières informations de gestion et une figure standard, où la figure standard comprend une pluralité de repères de registre (204, 72) pour spécifier ultérieurement diverses valeurs d'écart, et les premières informations de gestion incluent des informations représentant une première valeur de correction appliquée lors de la formation d'images et sont intégrées dans la première sous-image (64, 202) sous la forme d'un code à barres bidimensionnel (206, 73) ;
générer une première image (66, 70) en composant une première image principale (62, 200) et la première sous-image (64, 202) ;
spécifier, sur la base d'une première image numérisée (54) qui correspond à la première image (66, 70) formée sur un premier papier (68) par la partie de formation d'images (24) et qui est obtenue par numérisation de la première image (66, 70) par la partie de numérisation d'images (38), une première valeur d'écart (74, 76) représentant une amplitude d'un écart de la première image (66, 70) par rapport au premier papier (68), où la première valeur d'écart (74, 76) est calculée en comparant des positions de la pluralité de repères de registre (204, 72) incluses dans la première image numérisée (54) avec une pluralité de positions de référence ; et
spécifier la première valeur de correction pour une correction d'écart appliquée lorsque la première image (66, 70) est formée, sur la base des premières informations de gestion restaurées par extraction et décodage du code à barres bidimensionnel (206, 73) inclus dans la première image numérisée (54) ;
le programme étant **caractérisé en ce que** le programme amène le processeur (40) à exécuter un processus comprenant :
calculer, sur la base de la première valeur d'écart (74, 76) et de la première valeur de correction, une première valeur d'écart réelle (102, 104) qui est générée dans un cas où aucune correction n'est effectuée sur une position de formation d'images sur la base de la première valeur de correction, la première valeur d'écart réelle (102, 104) étant calculée en soustrayant la première valeur de correction de la première valeur d'écart (74, 76) ;
calculer une deuxième valeur de correction (130) sur la base de la première valeur d'écart réelle (102, 104) ;
intégrer des deuxièmes informations de gestion, où les deuxièmes informations de gestion sont une figure ayant un motif représentant la deuxième valeur de correction (130) dans une deuxième image ;
générer une deuxième sous-image incluant les deuxièmes informations de gestion et la figure standard ;
générer la deuxième image en composant une deuxième image principale et la deuxième sous-image ; et
corriger une position à laquelle la deuxième image est formée sur un deuxième papier, en fonction de la deuxième valeur de correction (130).

7. Procédé de formation d'images comprenant :
générer une première sous-image (64, 202) incluant des premières informations de gestion et une figure standard, où la figure standard comprend une pluralité de repères de registre (204, 72) pour spécifier ultérieurement diverses valeurs d'écart, et les premières informations de gestion incluent des informations représentant une première valeur de correction appliquée lors de la formation d'images et sont intégrées dans la première sous-image (64, 202) sous la forme d'un code à barres bidimensionnel (206, 73) ;
générer une première image (66, 70) en composant une première image principale (62, 200) et la première sous-image (64, 202) ;
spécifier, sur la base d'une première image numérisée (54) qui correspond à la première image (66, 70) formée sur un premier papier (68) par une partie de formation d'images (24) et qui est obtenue par numérisation de la première image (66, 70) par une partie de numérisation d'images (38), une première valeur d'écart (74, 76) représentant une amplitude d'un écart de la première image (66, 70) par rapport au premier papier (68), où la première valeur d'écart (74, 76) est calculée en comparant des positions de la pluralité de repères de registre (204, 72) incluses dans la première image numérisée (54) avec une pluralité de positions de référence ; et
spécifier la première valeur de correction pour une correction d'écart appliquée lorsque la première image (66, 70) est formée, sur la base des premières informations de gestion restaurées par extraction et décodage du code à barres bidimensionnel (206, 73) inclus dans la première image numérisée (54) ;
le procédé de formation d'images étant **caractérisé en ce que** :
calculer, sur la base de la première valeur d'écart (74, 76) et de la première valeur de correction, une première valeur d'écart réelle (102, 104) qui est générée dans un cas où aucune correction n'est effectuée sur une position de formation d'images sur la base de la première valeur de correction, la première valeur d'écart réelle (102, 104) étant calculée en soustrayant la première valeur de correction de la première valeur d'écart (74, 76) ;
calculer une deuxième valeur de correction (130) sur la base de la première valeur d'écart réelle (102, 104) ;
intégrer des deuxièmes informations de gestion, où les deuxièmes informations de gestion sont une figure ayant un motif représentant la deuxième valeur de correction (130) dans une deuxième image ;
générer une deuxième sous-image incluant les deuxièmes informations de gestion et la figure standard ;
générer la deuxième image en composant une deuxième image principale et la deuxième sous-image ; et
corriger une position à laquelle la deuxième image est formée sur un deuxième papier, en fonction de la deuxième valeur de correction (130).
